# EUROPÄISCHE PATENTANMELDUNG

(11) **EP 1 112 678 A2**
(43) Veröffentlichungstag der Anmeldung: **04.07.2001**
(21) Anmeldenummer: 00127632.8
(22) Anmeldetag: 16.12.2000
(51) Int. Cl.: A01G 9/02

(54) **Behälter, insbesondere Blumenkasten oder -topf**

(30) Priorität: 03.01.2000 DE 10000050
(71) Anmelder: Helix Pflanzen GmbH, 70806 Kornwestheim (DE)
(72) Erfinder: Müller, Hans, 70806 Kornwestheim (DE)
(74) Vertreter: Jeck, Anton, Dipl.-Ing.

(57) **Zusammenfassung**

Es handelt sich um einen Behälter (16) mit nach oben sich erstreckenden Seitenwänden (20, 22) sowie mindestens einem Pflanzeinsatz (10) zur Aufnahme vorgefertigter Pflanzen (12). Der Raum (17) zwischen dem Boden (19) des Behälters (16) und dem Boden (21) des Pflanzeinsatzes (10) ist mit Erde (18) auffüllbar. Es sind Halteelemente (30) vorgesehen, die mit den Seitenwänden (20, 22) des Behälters (16) verbindbar sind und den Pflanzeinsatz (10) in definierter Höhe halten.

## Beschreibung

Die Erfindung betrifft einen Behälter nach dem Oberbegriff des Anspruches 1.

Bei herkömmlichen Behältern der eingangs genannten Art, wie sie z. B. in der DE 296 22 382 U1 beschrieben sind, handelt es sich um eine Pflanzeinrichtung mit einem Blumenkasten, wobei der Einsatz aus einem nach oben hin offenen Korb besteht und als Einsatz im mit Erde gefüllten Blumenkasten versenkt angeordnet wird. Hierfür wird der Blumenkasten mit Erde aufgefüllt, von der sodann ein Teil entnommen wird, um den Einsatz einlegen zu können. Eine andere Möglichkeit, den Einsatz ordnungsgemäß einzubringen, besteht darin, dass der Blumenkasten nur teilweise mit Erde aufgefüllt wird, sodann der Einsatz in den Blumenkasten gelegt und seitlich mit Erde aufgefüllt wird. Ein wesentlicher Nachteil der bekannten Pflanzeinrichtung besteht darin, dass das ordnungsgemäße Einhängen des Einsatzes mit erheblichem Aufwand verbunden ist. Darüberhinaus müssen regelmäßig mehrere Einsetzvorgänge durchgeführt werden, um die Deckseite des Einsatzes in Höhe des Blumenkastens, was aus ästhetischen Gründen wünschenswert ist, zu positionieren.

Durch die DE-U1-9420732 ist ein Balkonkasten mit einem Halteelement in Form eines sich am Rand des Balkonkastens abstützenden Tragorgans bekannt. Das Tragorgan hat Ausschnitte zum Einsetzen von Blumentöpfen. Der Balkonkasten selbst ist nicht für die Aufnahme von Blumenerde vorgesehen.

Ferner ist durch die DE-A1-3740100 ein Übertopf bekannt, in der eine Tragplatte mit einer wasseransaugenden Matte über Tragarme einhängbar ist, wobei die Tragplatte einen etwa gleich wie die Tragarme langen Blumentopf trägt. Auch in diesem Übertopf ist keine Blumenerde vorgesehen.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, dass die Erfindung jedenfalls dann verwirklicht ist, wenn es sich um einen Behälter handelt, bei dem die Positionierung des Pflanzeinsatzes durch Halteelemente bestimmt wird, so dass der Benutzer beim beliebigen Behälter immer gewährleistet hat, dass die Deckseite des Pflanzeinsatzes in etwa in der Höhe der Oberkante des Behälters liegt. Dabei wird so vorgegangen, dass in die Seitenwände des Behälters Halteelemente eingehängt werden, der Behälter sodann mit Erde aufgefüllt wird, bis diese mit den Halteelementen in Berührung stehen. Schließlich wird der Pflanzeinsatz in den Behälter gelegt, wobei er sich auf den Halteelementen abstützt. Die Halteelemente haben hierbei einen doppelte Funktion. Zum einen wird durch die Halteelemente bestimmt, bis zu welcher Höhe der Behälter mit Erde aufgefüllt wird, zum anderen gewährleisten sie auch, dass der aufgenommene Pflanzeinsatz während der ganzen Vegetationszeit die gleiche Position in Bezug auf den Behälter einnimmt. Eine Absenkung des Pflanzeinsatzes innerhalb des Behälters wird vermieden. Dies ist insbesondere dann von Bedeutung, wenn weiche Pflanzenerde gewählt wird, die nach Einlegen des Pflanzeinsatzes unter dessen Druck und Gewicht zusammengedrückt wird. Der Pflanzeinsatz nimmt hierbei auch dann eine feste Position ein, wenn der Behälter unterschiedliche Formen aufweist. In der Praxis werden Behälter verwendet, deren Seitenwände unterschiedliche Neigungen in Bezug auf die waagerechte Position einnehmen können. In solchen Fällen ist es ohne die Halteelemente nicht ohne Weiteres möglich, die Pflanzeinsätze mittig und in gewünschter Höhe zu positionieren. Durch die Halteelemente wird dieses Problem ohne Weiteres gelöst.

Weitere zweckmäßige und vorteilhafte Ausgestaltungen der Erfindung gehen aus den Unteransprüchen hervor.

Eine besonders zweckmäßige Ausgestaltung sieht vor, dass die Halteelemente in die Seitenwände einhängbar sind und mindestens ein Tragorgan aufweisen, auf dem sich der Boden abstützt. Im Rahmen dieses Erfindungsgedankens ist es zweckmäßig, wenn das Halteelement auf der Oberkante der Seitenwände einhängbar ist und einen in den Raum des Behälters hineinragenden Halteschenkel aufweist, dessen unteres Ende das etwa horizontal sich erstreckende Tragorgan aufweist. Dabei kann die Länge des Halteschenkels in etwa der Höhe des Pflanzeneinsatzes entsprechen. Bei dem Halteelement handelt es sich um einen im Wesentlichen S-förmigen Körper, dessen eines Ende in die Seitenwände einhängbar ist, während das andere Ende das eigentliche Tragteil bildet, auf dem sich der Pflanzeinsatz abstützt.

Eine weitere zweckmäßige Ausgestaltung der Erfindung sieht vor, dass das Tragorgan nach oben vorstehende Positionierkörper aufweist, die mit dem Boden unverrückbar verbindbar sind. Durch diese Maßnahme wird erreicht, dass der Pflanzeinsatz innerhalb des Behälters symmetrisch (mittig) angeordnet werden kann. In der Bodenseite des Einsatzes können die Positionierkörper aufnehmende Aufnahmen ausgebildet sein, in welche die Positionierkörper einsteckbar sind. Handelt es sich um einen Pflanzeinsatz mit einem Grundkörper mit definierter Höhe, dann ist gewährleistet, dass die Deckseite des Grundkörpers mit der Oberkante des Behälters bündig abschließt, so dass die Pflanzen den Behälter deckseitig optimal abdecken.

Die Erfindung betrifft auch ein Halteelement für Behälter der eingangs genannten Art, wobei es sich um ein in die Oberkante der Seitenwände einhängbares Einhängestück mit einem Tragorgan handelt, auf dem der Boden abstützbar ist.

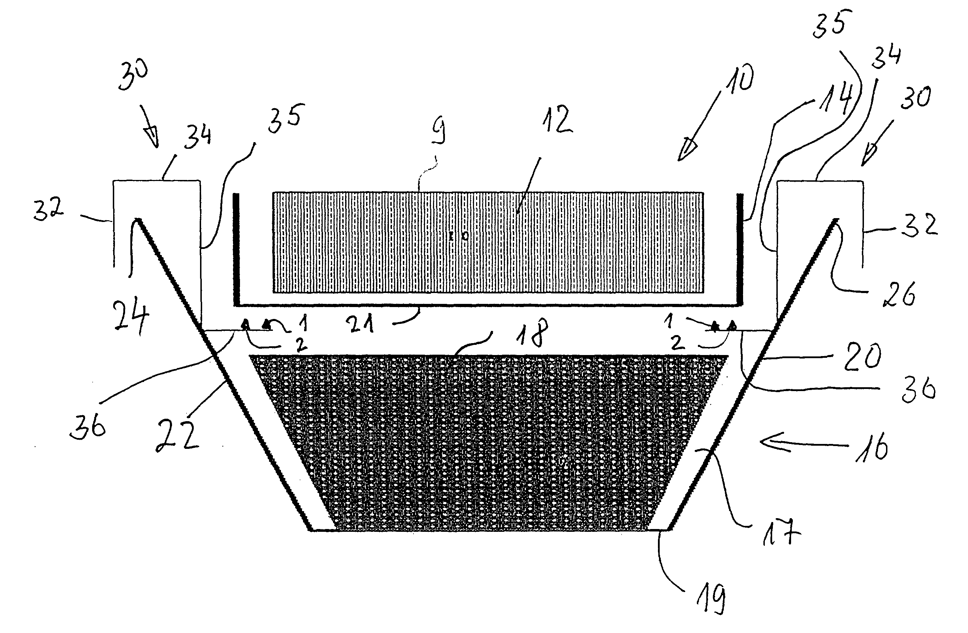

Ein Ausführungsbeispiel der Erfindung ist in der Zeichnung schematisch dargestellt und wird im Folgenden erläutert.

Die Figur zeigt einen Behälter in Explosionsdarstellung.

Der Behälter 16, hier ein Blumenkasten, weist nach oben hin sich erstreckende Seitenwände 20, 22 sowie einen Pflanzeinsatz 10 zur Aufnahme vorgefertigter Pflanzen 12 auf. Der Raum 17 zwischen dem Boden 9 des Behälters 16 und dem Boden 21 des Pflanzeinsatzes 10 ist mit Erde 18 ausgefüllt. Es sind mit den Seitenwänden 20, 22 des Behälters 16 verbindbare und den Pflanzeinsatz 10 in definierter Höhe haltende Halteelemente 30 vorgesehen, die in die Seitenwände 20, 22 einhängbar sind und mindestens ein Tragorgan 36 aufweisen, auf den sich der Boden 21 abstützt. Das Halteelement 30 ist auf der Oberkante 24 der Seitenwände 20, 22 einhängbar und weist einen in den Raum 17 des Behälters 16 hineinragenden Halteschenkel 35 auf, dessen unteres Ende, das etwa horizontal sich erstreckende Tragorgan 36 aufweist. Die Länge des Halteschenkels 35 entspricht in etwa der Höhe des Pflanzeinsatzes 10. Das Tragorgan 26 weist nach oben hin vorstehende Positionierkörper 1, 2 auf, die mit dem Boden 21 unverrückbar verbindbar sind. Der Pflanzeneinsatz 10 besteht aus einem Grundkörper 14 mit definierter Höhe. Die Höhe des Grundkörpers 14 entspricht in etwa der Höhe des Halteschenkels 35.

Bei der Bereitstellung des Behälters 16 mit dem Pflanzeinsatz 10 wird wie folgt vorgegangen: Der Behälter 16 wird mit mindestens zwei regelmäßig vier oder mehreren Halteelementen 30 bestückt, indem sie über ihre Einhängestücke 32, 35 auf der Obekante 24, 26 eingehängt werden. Der Halteschenkel 35 bestimmt, wie tief der Pflanzeinsatz 10 im Blumenkasten 16 versenkt angeordnet wird. Nach Bestückung des Blumenkastens mit Halteelementen 30 wird dieser mit Erde 18 aufgefüllt, bis diese die Höhe der Tragorgane 36 erreicht hat. Daraufhin wird der Pflanzeinsatz 10 in den Blumenkasten gelegt, wobei er sich auf den Tragorganen 36 abstützt. Gegebenenfalls kann noch der Raum zwischen den Schenkeln 14 und den Seitenwänden 20 mit Erde aufgefüllt werden. Die Deckseite 9 des Pflanzeneinsatzes 10 befindet sich in der Höhe der Oberkanten 26.

## Patentansprüche

1. Blumenbehälter (16), z. B. Blumenkasten oder -topf, mit nach oben hin sich erstreckenden Seitenwänden (20, 22) sowie mindestens einem Pflanzeinsatz (10) zur Aufnahme vorgefertigter Pflanzen (12), wobei der Raum (17) zwischen dem Boden (19) des Behälters (16) und dem Boden (21) des Pflanzeinsatzes (10) mit Erde (18) ausfüllbar ist, gekennzeichnet durch
mit den Seitenwänden (20, 22) des Behälters (16) verbindbare und den Pflanzeinsatz (10) in definierter Höhe haltende Halteelemente (30).

2. Behälter nach Anspruch 1,
dadurch gekennzeichnet,
dass die Halteelemente (30) in die Seitenwände (20, 22) einhängbar sind und mindestens ein Tragorgan (36) aufweisen, auf dem sich der Boden (21) abstützt.

3. Behälter nach Anspruch 1,
dadurch gekennzeichnet,
dass das Halteelement (30) auf der Oberkante (24) der Seitenwände (20, 22) einhängbar ist, einen in den Raum (17) des Behälters (16) hineinragenden Halteschenkel (35) aufweist, dessen unteres Ende das etwa horizontal sich erstreckende Tragorgan (36) aufweist.

4. Behälter nach einem der Ansprüche 1 bis 3,
dadurch gekennzeichnet,
dass die Länge des Halteschenkels (35) in etwa der Höhe des Pflanzeinsatzes (10) entspricht.

5. Behälter nach einem der Ansprüche 1 bis 4,
dadurch gekennzeichnet,
dass das Tragorgan (36) nach oben hin vorstehende Positionierkörper (1, 2) aufweist, die mit dem Boden (21) unverrückbar verbindbar sind.

6. Behälter nach einem der Ansprüche 1 bis 5,
dadurch gekennzeichnet,
dass der Pflanzeneinsatz aus einem Grundkörper (14) mit definierter Höhe besteht.

7. Behälter nach Anspruch 6,
dadurch gekennzeichnet,
dass die Höhe des Grundkörpers (14) in etwa der Höhe des Halteschenkels (35) entspricht.

8. Halteelement für Behälter nach einem der Ansprüche 1 bis 7, gekennzeichnet durch
ein in die Oberkante (24) der Seitenwände (20, 22) einhängbares Einhängestück (32, 34) sowie ein Tragorgan (36), auf dem der Boden (21) abstützbar ist.

9. Halteelement nach Anspruch 8,
dadurch gekennzeichnet,
dass das Halteelement (30) ein aus gespritztem Kunststoff bestehendes Teil ist.
